# EUROPÄISCHE PATENTSCHRIFT

(11) **EP 0 683 189 B1**
(45) Veröffentlichungstag und Bekanntmachung des Hinweises auf die Patenterteilung: **26.08.1998**
(21) Anmeldenummer: 95107030.9
(22) Anmeldetag: 09.05.1995
(51) Int. Cl.: C08G 18/78, C08G 18/80

(54) **Olefinisch ungesättigte Polyisocyanate**
Unsaturated polyisocyanates
Polyisocyanates insaturés

(30) Priorität: 20.05.1994 DE 4417745
(43) Veröffentlichungstag der Anmeldung: 22.11.1995
(73) Patentinhaber: BAYER AG, 51368 Leverkusen (DE)
(72) Erfinder: Brahm, Martin, Dr., D-51766 Engelskirchen (DE); Arning, Eberhard, D-41564 Kaarst (DE); Schmalstieg, Lutz, Dr., D-50676 Köln (DE); Mertes, Harald, Dr., D-50670 Köln (DE); Schwindt, Jürgen, Dr., D-51373 Leverkusen (DE)

(56) Entgegenhaltungen:
- EP-A- 0 303 150
- US-A- 5 283 311

## Beschreibung

Die Erfindung betrifft olefinisch ungesättigte, Allophanatgruppen enthaltende Polyisocyanate, ein Verfahren zu ihrer Herstellung, ihre Verwendung als Bindemittel in einkomponentig zu verarbeitenden Beschichtungsmaterialien, sowie ein, derartige Polyisocyanate als Bindemittel enthaltendes Beschichtungsmittel.

Einkomponentig zu verarbeitende Beschichtungsmittel auf Basis NCO-funktioneller Urethangruppen enthaltender Prepolymere sind seit langem bekannt (Houben Weyl, Methoden der Organischen Chemie, Band E 20, Seite 1646, Georg Thieme Verlag 1987). Sie werden hergestellt durch Reaktion von Diisocyanaten bzw. modifizierten Diisocyanaten mit höherfunktionellen Polyolen wie z.B. Polyether- und Polyesterpolyolen. Der höhermolekulare Aufbau verleiht diesen Verbindungen gute filmbildende und filmoptische Eigenschaften, jedoch ebenso eine höhere Viskosität, weshalb sie nur stark verdünnt oder mit erheblichem Anteil an monomeren Diisocyanat als Lackbindemittel bzw. als Beschichtungsmaterial eingesetzt werden können. Hohe Konzentrationen an monomerem Isocyanat sind jedoch aus physiologischer Sicht nicht akzeptabel. Darüber hinaus ist der Einsatz von großen Mengen an Lösungsmittel umweltpolitisch nicht vertretbar. Die Schere zwischen einem hochmolekularen, hochfunktionellen Aufbau mit hoher Viskosität aber positiven Produkteigenschaften einerseits und niedermolekularen niedrigviskosen Produkten mit ungenügender Lösungsbeständigkeit und ungenügenden Trocknungseigenschaften andererseits läßt sich durch NCO-funktionelle Prepolymere nach dem oben erwähnten Aufbauprinzip nicht schließen.

Neben NCO-funktionellen Beschichtungsmaterialien sind auch oxidativ vernetzbare 1 K-Systeme beschrieben (Ullmann, Enzyklopädie der technischen Chemie 4. Auflage, Band 19, Seite 75 ff, Verlag Chemie Weinheim, Deerfield Beach Florida, Basel 1980). Diese sind ebenfalls nur in verdünnten Lösungen als Bindemittel für Beschichtungsmaterialien einsetzbar.

Beschichtungsmaterialien, die sowohl über einen oxidativen- als auch isocyanatvernetzenden Trocknungsmechanismus verfügen sind bisher nicht bekannt geworden.

Wie jetzt überraschend gefunden wurde, stellen olefinisch ungesättigte, Allophanatgruppen enthaltende Polyisocyanate auf Basis von (cyclo)aliphatischen Polyisocyanaten, insbesondere Diisocyanaten und olefinisch ungesättigten, vorzugsweise einwertigen Alkoholen interessante, oxidativ und unter dem Einfluß von Feuchtigkeit aushärtbare Bindemittel für einkomponentig zu verarbeitende Beschichtungsmittel dar. Die genannten Bindemittel eignen sich insbesondere zur Herstellung von lösungsmittelfreien bzw. -armen Beschichtungsmaterialien mit guten lacktechnischen Eigenschaften, schneller chemischer Trocknung bei Raumtemperatur und universaler und physiologisch unbedenklicher Anwendbarkeit.

Allophanatgruppen aufweisende Polyisocyanate sind beispielsweise aus EP-A-0 000 194, EP-A-0 303 150 oder GB-PS 994 890 bekannt. Obwohl hier vereinzelt innerhalb von langen Listen geeigneter Alkohole auch olefinisch ungesättigte Alkohole als Ausgangsmaterialien genannt werden, fehlt jeglicher konkreter Hinweis auf olefinisch ungesättigte, Allophanatgruppen aufweisende Polyisocyanate der Art der erfindungsgemäßen Verbindungen, geschweige denn auf deren Verwendung in einkomponentig, oxidativ und unter dem Einfluß von Feuchtigkeit aushärtbaren Beschichtungsmitteln.

Die in EP-A-0 524 500, EP-A-0 524 501 bzw. EP-A-0 566 037 beschriebenen, Allophanatgruppen aufweisende Polyisocyanate basieren nicht auf ungesättigten Alkoholen und werden als Vernetzer für zweikomponentig zu verarbeitende Beschichtungsmittel empfohlen.

Die eigenen älteren deutschen Patentanmeldungen P 43 05 162.6 und P 43 14 252.4 betreffen ebenfalls olefinisch ungesättigte Isocyanate, die in einkomponentig zu verarbeitenden Beschichtungsmitteln als Bindemittel eingesetzt werden können, jedoch handelt es sich bei diesen Isocyanaten nicht um Allophanatgruppen aufweisende Polyisocyanate der Art der erfindungsgemäßen Verbindungen.

Gegenstand der vorliegenden Erfindung sind olefinisch ungesättigte, Allophanatgruppen enthaltende Polyisocyanate, gekennzeichnet durch
a) einen NCO-Gehalt von 6 bis 20 Gew.-%,
b) einen, einer Iodzahl von 15 bis 150 entsprechendem Gehalt an olefinischen Doppelbindungen,
c) einen Gehalt an Kohlenwasserstoffketten mit 12 bis 30 Kohlenstoffatomen von 100 bis 700 mg/g und
d) einen Gehalt an Allophanatgruppen (berechnet als C₂HN₂O₃, Molekulargewicht = 101) von 10 bis 300 mg/g.

Gegenstand der Erfindung ist auch ein Verfahren zur Herstellung dieser olefinisch ungesättigten Polyisocyanate durch Umsetzung
einer Polyisocyanatkomponente A2) mit einem NCO-Gehalt von 20 bis 61 Gew.-% und einer (mittleren) NCO-Funktionalität von 1,8 bis 2,5, bestehend im wesentlichen aus mindestens einem organischen Polyisocyanat, mit einer Urethangruppen aufweisenden Isocyanatkomponente U, gegebenenfalls in Gegenwart von die Umsetzung von Urethangruppen mit Isocyanatgruppen zu Allophanatgruppen beschleunigenden Katalysatoren, sowie gegebenenfalls weiteren Hilfs- und Zusatzmitteln, unter Einhaltung eines Äquivalentverhältnisses von Isocyanatgruppen der Komponente A 2) zu Urethangruppen der Komponente U von mindestens 3:1, wobei die Urethangruppen aufweisende Isocyanatkomponente U ihrerseits ein unter Einhaltung eines NCO/OH-Äquivalentverhältnisses von 4:1 bis 120:1 hergestelltes Umsetzungsprodukt einer
Polyisocyanatkomponente A1) mit einem NCO-Gehalt von 20 bis 61 Gew.-% und einer (mittleren) NCO-Funktionalität von 1,8 bis 2,5, bestehend im wesentlichen aus mindestens einem organischen Polyisocyanat, mit
einer Alkoholkomponente B) mit einer (mittleren) Hydroxylfunktionalität von 1,0 bis 1,8
darstellt und anschließende destillative Entfernung von überschüssigen, destillierbaren Ausgangspolyisocyanaten bis zu einem Restgehalt an solchen Isocyanaten von maximal 0,5 Gew.-%, dadurch gekennzeichnet, daß die Alkoholkomponente B)
zu 80 bis 100 Gew.-% aus einer olefinisch ungesättigten Alkoholkomponente B1) einer über 60 liegenden Iodzahl, bestehend aus mindestens einem olefinisch ungesättigten Alkohol mit einer Kohlenwasserstoffkette einer (mittleren) Kettenlänge von mindestens 12 Kohlenstoffatomen und zu
0 bis 20 Gew.-% aus einer gesättigten Alkoholkomponente B2), bestehend aus mindestens einem gesättigten Alkohol des Molekulargewichtsbereichs 32 bis 300
besteht.

Gegenstand der Erfindung ist auch die Verwendung der erfindungsgemäßen, olefinisch ungesättigten Polyisocyanate als Bindemittel für bei Raumtemperatur einkomponentig zu verarbeitende Beschichtungsmaterialien.

Gegenstand der Erfindung ist schließlich auch ein einkomponentig zu verarbeitendes Beschichtungsmittel bestehend aus
(i) einem Bindemittel,
(ii) die oxidative Vernetzung beschleunigenden Katalysatoren
und gegebenenfalls
(iii) inerten Lösungsmitteln und/oder sonstigen an sich bekannten Zusatzstoffen,
dadurch gekennzeichnet, daß das Bindemittel (i) aus olefinisch ungesättigten Polyisocyanaten der erfindungsgemäßen Art besteht.

Die beim erfindungsgemäßen Verfahren als Ausgangskomponente Al) einzusetzende Polyisocyanatkomponente weist einen NCO-Gehalt von 20 bis 61, vorzugsweise 20 bis 50 Gew.-% und eine (mittlere) NCO-Funktionalität von 1,8 bis 2,5, vorzugsweise 2 auf. Die Polyisocyanatkomponente A) besteht vorzugsweise aus aliphatischen bzw. cycloaliphatischen Diisocyanaten wie beispielsweise 1,4-Diisocyanatobutan, 1,5- Diisocyanatopentan, 1,6-Diisocyanatohexan (HDI), 1,11-Diisocyanatoundecan, Dodecamethylendiisocyanat, 2,2,4- und 2,4,4-Trimethyl-1,6-diisocyanatohexan, 1-Isocyanato-3-isocyanatomethyl-3,5,5-trimethylcyclohexan (IPDI), 1,3-Diisocyanatocyclobutan, 1,3- und 1,4-Diisocyanatocyclohexan, 4,4'-Bis-(isocyanatocyclohexyl)-methan, 1,2-Bis(isocyanatomethyl)-cyclobutan, 1,3- und 1,4-Bis-(isocyanatomethyl)-cyclohexan, Hexahydro-2,4- und/oder 2,6-diisocyanatotoluol, Bis-isocyanatomethylnorbornan (Isomerengemisch), 2,5- und 2,6-Bis(isocyanatomethyl)bicyclo[2.2.1]]heptan, 1-Isocyanato-4(3)-isocyanatomethyl-1-methylcyclohexan oder p-Xylylendiisocyanat, 2,3-Bis(8-isocyanatooctyl)-4-octyl-5-hexylcyclohexan sowie deren Gemischen.

Die Komponente A1) kann auch Modifizierungsprodukte der beispielhaft genannten Diisocyanate mit Biuret-, Uretdion-, Isocyanurat-, Allophanat- und Carbodiimidgruppen enthalten. Es ist auch möglich zur Einstellung spezieller Eigenschaften monofunktionelle Isocyanate mitzuverwenden; dies ist jedoch keineswegs bevorzugt.

Besonders bevorzugt besteht die Komponente A1) aus 1,6-Diisocyanatohexan (HDI), 1-Isocyanato-3,3,5-trimethyl-5-isocyanatomethyl-cyclohexan (IPDI) oder aus Gemischen dieser beiden Diisocyanate.

Bei der Polyisocyanatkomponente A2) handelt es sich um organische Polyisocyanate bzw. Polyisocyanatgemische der bereits bei der Beschreibung der Polyisocyanatkomponente A1) genannten Art. Die Unterscheidung zwischen den Polyisocyanaten A1) einerseits und den Polvisocvanaten A2) andererseits ist lediglich erforderlich, weil die Polyisocyanatkomponente A2), obwohl der Definition der Komponente A1) entsprechend, dieser nicht entsprechen muß. Bei der Polyisocyanatkomponente A2) handelt es sich entweder um den nach der Urethanbildung aus den Komponenten A1) und B) im Reaktionsgemisch vorliegenden Überschuß an Ausgangspolyisocyanat A1) oder um ein Gemisch aus derartigem überschüssigem Ausgangspolyisocyanat A1) mit weiterem, nach der Urethanbildung zugemischtem Polyisocyanat, welches sich vom ursprünglich eingesetzten Polyisocyanat A1) unterscheiden kann, jedoch ebenfalls der im Zusammenhang mit der Komponente A1) gemachten Definition entspricht.

Die Alkoholkomponente B) besteht zu 80 bis 100 %, vorzugsweise ausschließlich aus olefinisch ungesättigten Alkoholen B1), sowie gegebenenfalls zu bis zu 20 Gew.-% aus gesättigten Alkoholen B2).

Die (mittlere) Hydroxylfunktionalität der Alkoholkomponente B) liegt bei 1 bis 1,8, vorzugsweise bei 1 bis 1,2 und insbesondere bei 1.

Die olefinisch ungesättigte Alkoholkomponente B1) weist eine Iodzahl von über 60, vorzugsweise von über 80 und besonders bevorzugt von 100 bis 300 auf. Sie besteht aus mindestens einem olefinisch ungesättigten Alkohol mit einer Kohlenwasserstoffkette mit (im Mittel) mindestens 12, vorzugsweise mindestens 14 und besonders bevorzugt 14 bis 20 Kohlenstoffatomen. Bevorzugt besteht die ungesättigte Alkoholkomponente B1) aus monofunktionellen Alkoholen, die sich von entsprechenden Säuren bzw. Säuregemischen aus ungesättigten synthetischen und natürlichen Fettsäuren ableiten. Natürliche vorkommende Fettsäuregemische sind beispielsweise die aus Rizinusöl, Erdnußölfett, Baumwollsaatöl, Safloröl, Holzöl, Sojaöl, Sonnenblumenöl, Leinöl, Rüböl, Talöl, Spermöl und Heringsöl abgeleiteten Säuren. Besonders bevorzugt sind Fettalkohole bzw. Gemische, die im Mittel 14 bis 20 Kohlenstoffatome aufweisen.

Die olefinisch ungesättigte Alkoholkomponente B1) kann auch, zumindest teilweise, aus Ether- bzw. Estergruppen aufweisenden Alkoxylierungsprodukten der beispielhaft genannten olefinisch ungesättigten Alkohole bzw. Fettsäuren bestehen, soweit die Verwendung bzw. Mitverwendung derartiger Alkoxylierungsprodukte den obengemachten Angaben bezüglich der Funktionalität und der Iodzahl der Komponente B) nicht widerspricht. Die Mitverwendung von derartigen, Ethergruppen aufweisenden Alkoholen ist weniger bevorzugt.

Die olefinisch ungesättigte Alkoholkomponente B1) kann auch, zumindest teilweise aus Umesterungsprodukten von olefinisch ungesättigten Fetten bzw. Ölen mit mehrwertigen Alkoholen wie Glycerin, Trimethylolpropan, Pentaerythrit und/oder Sorbit bestehen, soweit die Verwendung bzw. Mitverwendung derartiger, olefinisch ungesättigter Umesterungsprodukte den obengemachten Angaben bezüglich der Funktionalität und Iodzahl der Komponente B) nicht widerspricht.

Die allenfalls in einer maximalen Menge von bis zu 20 Gew.-%, bezogen auf das Gesamtgewicht der Komponente B) mitzuverwendende Alkoholkomponente B2) besteht aus mindestens einem gesättigten Alkohol des Molekulargewichtsbereichs 32 bis 300. In Betracht kommen einwertige Alkohole wie Methanol, Ethanol, n-Propanol, iso-Propanol, Methoxypropanol, isomere Butanole, Pentanole, Hexanole, n-Heptanol, n-Octanol, n-Nonanol, n-Decanol, n-Dodecanol, n-Octadecanol, ^{R}Lorol-Typen, gesättigte Fettalkohole und Gemische sowie mehrwertige Alkohole wie beispielsweise Ethylenglykol, Propandiol-1,2 und -1,3, Butandiol-1,4 und 1,3, Hexandiol-1,6, Octandiol-1,8, Nonandiol-1,9, Decandiol-1,10, Dodecandiol-1,12, Octadecandiol-1,18, Neopentylglykol, 1,4-Bishydroxymethylcychexan, 2-Methyl-1,3-propandiol, 2,2,4-Trimethylpentandiol-1,3, 2-Ethyl-1,3-hexandiol, Glycerin, Trimethylolpropan, Trimethylolethan, die isomeren Hexantriole und Pentaerythrit oder Sorbit, bzw. beliebige Gemische derartiger gesättigter Alkohole.

Bei der Durchführung des erfindungsgemäßen Verfahrens müssen selbstverständlich die beispielhaft genannten Ausgangsmaterialien bezüglich ihrer Art und Mengenverhältnisse im Rahmen der gemachten Offenbarung so gewählt werden, daß letztendlich Verfahrensprodukte mit den oben unter a) bis d) genannten Parametern resultieren.

Das erfindungsgemäße Verfahren kann entweder dergestalt durchgeführt werden, daß die Komponenten A1) und B) in einem NCO/OH-Äquivalentverhältnis von 4:1 bis 120:1, vorzugsweise 6:1 bis 60:1 und besonders bevorzugt 8:1 bis 30:1 einstufig über die Urethan-Zwischenstufe zu den Allophanatgruppen aufweisenden Verfahrensprodukten umgesetzt werden. Diese über die Urethan-Zwischenstufe führende erfindungsgemäße Umsetzung erfolgt im allgemeinen innerhalb des Temperaturbereichs von 30 bis 200, vorzugsweise 50 bis 160°C, unter allmählicher Temperaturerhöhung innerhalb dieser Bereiche, wobei vorzugsweise zumindest während der Allophanatisierung der vorab gebildeten Urethangruppen an sich bekannte Katalysatoren zur Beschleunigung der zwischen Urethan- und Isocyanatgruppen ablaufenden Allophanatisierungsreaktion mitverwendet werden. Hierzu gehören beispielsweise Triethylamin, Tributylamin, N,N,N',N'-Tetramethylbutyl-1,4-diamin, Bis(dimethylamino)ethylether, Dimethylethanolamin, 1,4-Diazabicyclo-[2,2,2]-octan, Diazobicycloundecen, N,N-Dimethylbenzylamin, 1- und 2-Methylimidazol, Tris(dimethylaminometyl)phenol, Pyridin, Mannichbasen, Morpholine, Tetraalkylammoniumhydroxide, Trimethylbenzylammoniumhydroxid und Alkalihydroxide wie Natriumhydroxyd, Alkaliphenolate, Metallsalze wie Eisen-(III)-chlorid, Kaliumoctoat, Zinkacetylacetonat, Zinnverbindungen wie Zinn-(II)-octoat, Zinn-(II)-ethylhexanoat, Zinn-(II)-laurat, Aluminium-tri(ethlylacetoacetat), Dibutylzinnoxid, Dibutylzinndichlorid, Dibutylzinndiacetat, Dibutylzinndilaurat, Dibutylzinnmaleat oder Dioctylzinndiacetat und Mineralsäuren wie Schwefelsäure, Salzsäure, Phosphorsäure und Perchlorsäure eingesetzt werden können. Diese Katalysatoren werden im allgemeinen in Mengen von 0 bis 5 Gew.-%, bezogen auf das Reaktionsgemisch, eingesetzt.

Vorzugsweise wird die erfindungsgemäße Umsetzung zweistufig dergestalt durchgeführt, daß zunächst eine Vorreaktion der Komponenten A1) und B) bei Temperaturen von bis zu 120°C unter Bildung der entsprechenden Urethangruppen aufweisenden Umsetzungsprodukte erfolgt, wonach sich die Allophanatisierung bei höherer Temperatur von bis zu 200°C, vorzugsweise von bis zu 160°C anschließt.

Während bei der vorstehend genannten einstufigen Arbeitsweise die Polyisocyanatkomponente A2) dem nach in situ erfolgter Urethanbildung noch vorliegenden Überschuß an nicht abreagiertem Ausgangspolyisocyanat A1) entspricht, ist bei der zuletzt genannten zweistufigen Arbeitsweise neben dieser Variante auch eine weitere Variante denkbar und oftmals bevorzugt, gemäß welcher die zur Allophanatisierung eingesetzte Polyisocyanatkomponente A2) ein Gemisch darstellt aus nicht umgesetztem überschüssigem Ausgangspolyisocyanat A1) und nach erfolgter Urethanbildung zugesetztem weiterem Ausgangspolyisocyanat. So besteht beispielsweise eine bevorzugte Arbeitsweise darin, die Urethanbildung ausschließlich unter Verwendung von IPDI durchzuführen und dem Reaktionsgemisch nach erfolgter Urethanbildung und vor der Allophanatisierung als weiteres Ausgangsdiisocyanat HDI zuzumischen.

Bei allen Varianten wird im Anschluß an die Umsetzung das überschüssige, destillierbare Ausgangsdiisocyanat destillativ, vorzugsweise durch Dünnschichtdestillation bis auf einen Restgehalt im Verfahrensprodukt von unter 0,5, vorzugsweise unter 0,2 Gew.-% entfernt. Die so erhaltenen erfindungsgemäßen Polyisocyanate weisen folgende Kenndaten auf:
a) einen NCO-Gehalt von 6 bis 20 %, vorzugsweise 7 bis 16 %,
b) eine Jodzahl von 15 bis 150, vorzugsweise 30 bis 150,
c) einen Gehalt an Kohlenwasserstoffketten mit 12 bis 30 Kohlenstoffatomen von 100 bis 700 mg/g, vorzugsweise 300 bis 600 mg/g,
d) einen Gehalt an Allophanatgruppen (berechnet als C₂HN₂O₃, Molekulargewicht 101) von 10 bis 300 mg/g, vorzugsweise 40 bis 200 mg/g.

Vor der erfindungsgemäßen Verwendung der erfindungsgemäßen Polyisocyanate werden diesen im allgemeinen an sich bekannte, die oxidative Vernetzung beschleunigende Katalysatoren zugesetzt. Derartige Katalysatoren sind beispielsweise in Ullmann, Enzyklopädie der technischen Chemie, 4. Auflage, Band 23 Seite 421 (Trockenstoffe) Verlag Chemie 1983, sowie in der Offenlegungsschrift DE 4032546 und darin zitierten Schriften aufgeführt. Als Beispiele seien Kobalt-, Blei-, Magnesium-, Zirkonium-, Aluminium-, Mangan-, Calcium-, Cer-, Kupfer-, Nickel-, Vanadium-, Barium- und Zinksikkative sowie Gemische genannt. Auch an sich bekannte Katalysatoren zur Beschleunigung der Isocyanat-Additionsreaktion der oben bereits beispielhaft genannten Art können den erfindungsgemäßen Polyisocyanaten vor ihrer erfindungsgemäßen Verwendung zugemischt werden.

Zur Erzeugung eines speziellen Eigenschaftsprofils der erfindungsgemäß hergestellten Beschichtungsmassen kann es sinnvoll sein, andere nichtfunktionelle Polymere bzw. NCO-funktionelle Zusätze und Polymerkomponenten, die zur oxidativen Vernetzung befähigt sind, als weitere Bindemittelkomponenten mitzuverwenden. Derartige Bindemittelkomponenten werden im allgemeinen in einer Menge von maximal 60 %, vorzugsweise maximal 20 Gew.-%, bezogen auf das Gesamtgewicht aller Bindemittel, mitverwendet. Ganz besonders bevorzugt wird auf die Mitverwendung weiterer Bindemittelkomponenten bei der erfindungsgemäßen Verwendung der erfindungsgemäßen Polyisocyanate verzichtet.

Als weitere Bindemittelkomponenten kommen beispielsweise Alkydharze in Betracht wie sie z. B. in Römpp's Chemielexikon, Bd. 1, S. 202, Frankh'sche Verlagsbuchhandlung, Stuttgart, 1966 definiert oder bei D. H. Solomon, The Chemistry of Organic Filmformers, S. 75 - 101, John Wiley & Sons Inc., New York 1967, beschrieben sind. NCO-funktionelle Bindemittelkomponenten, die neben den erfindungsgemäßen Polyisocyanaten eingesetzt werden können sind beispielsweise Harnstoffgruppen und/oder Urethangruppen und/oder Isocyanuratgruppen und/oder Uretdiongruppen und/oder Biuretgruppen und/oder Allophanatgruppen aufweisende Derivate von organischen Diisocyanaten, insbesondere der bereits oben im Zusammenhang mit der Komponente A) genannten Art.

In den erfindungsgemäßen Beschichtungsmitteln können außerdem auch die üblichen Hilfs- und Zusatzmittel mitverwendet werden. Hierzu gehören beispielsweise Lösungsmittel, die allerdings im allgemeinen nur in geringen Mengen mitverwendet werden, so daß der Feststoffanteil der Beschichtungsmaterialien über 80, vorzugsweise über 85 und besonders bevorzugt über 90 Gew.-% liegt, vorzugsweise wird auf die Mitverwendung von Lösungsmitteln verzichtet, insbesondere dann, wenn als erfindungsgemäße Polyisocyanate solche eingesetzt werden, die bei 23°C eine Viskosität von 30 bis 3000 mPa.s aufweisen. Die Einstellung der Viskosität der erfindungsgemäßen Polyisocyanate ist durch einige wenige Vorversuche im Rahmen der obengemachten Offenbarung bezüglich Art und Mengenverhältnisse der Ausgangsmaterialien möglich.

Geeignete Lösungsmittel sind beispielsweise Toluol, Xylol, Cyclohexan, Chlorbenzol, Butylacetat, Ethylacetat, Ethylglykolacetat, Pentylacetat, Hexylacetat, Methoxypropylacetat (MPA), Tetrahydrofuran, Dioxan, Aceton, Methylethylketon, Testbenzin, höher substituierte Aromaten, wie beispielsweise unter der Bezeichnung Solvent Naptha^{R}, Solvesso^{R}, Shellsol^{R}, Isopar^{R}, Nappar^{R} und Diasol^{R} im Handel, Schwerbenzol, Tetralin, Dekalin und Alkane mit mehr als 6 Kohlenstoffatomen sowie Gemische derartiger Lösungsmittel.

Als weitere Hilfsstoffe können in den erfindungsgemäßen Beschichtungsmaterialien auch beispielsweise die üblichen Benetzungsmittel, Verlaufsmittel, Hautverhinderungsmittel, Antischaummittel, Mattierungsmittel wie beispielsweise Kieselsäure, Aluminiumsilikate und hochsiedende Wachse, viskositätsregulierende Stoffe, Pigmente, Farbstoffe, UV-Absorber, Stabilisatoren gegen thermischen bzw. oxidativen Abbau eingesetzt werden.

Die Beschichtungsmaterialien können zur Beschichtung beliebiger Substrate wie beispielsweise Holz, Kunststoffe, Leder, Papier, Textilien, Glas, Keramik, Putz, Mauerwerk, Metalle oder Beton verwendet werden. Sie lassen sich mit üblichen Applikationsmethoden wie Spritzen, Streichen, Fluten, Gießen, Tauchen, Walzen aufbringen. Die Beschichtungsmittel können in Form von Klarlacken als auch in Form pigmentierter Lacke verwendet werden.

Die so hergestellten Beschichtungen härten bei 20 °C im allgemeinen während eines Zeitraums von 1 bis 24 Stunden zu hochwertigen Überzügen aus. Die Härtung kann jedoch auch bei tieferen Temperaturen (bis -5 °C) oder beschleunigt bei höheren Temperaturen bis 130 °C erfolgen.

Die nachfolgenden Beispiele und Vergleichsbeispiele sollen die Erfindung näher erläutern, ohne sie jedoch einzuschränken. Alle Angaben in "Teilen" und "%" beziehen sich auf das Gewicht.

### Beispiel 1

In einer mit Stickstoff gespülten Rührapparatur werden jeweils 2580 g (30,7 val) 1,6-Hexamethylendiisocyanat vorgelegt und bei 60 °C mit 417 g (1,54 val) entwässertem HD-Ocenol 110/130 (monofunktioneller Fettalkohol, Jodzahl: 110-130, Handelsprodukt der Henkel KGaA) versetzt. Nach ca. 2 Stunden Reaktionsdauer unter Stickstoffatmosphäre erhöht man die Reaktionstemperatur auf 130°C und katalysiert mit 50 ppm Zinn-(II)-octoat. Nach einer Allophanatisierungsdauer von ca. 7,5 Stunden ist ein NCO-Gehalt von 38,1 % erreicht. Nachfolgend wird das überschüssige Diisocyanat durch Dünnschichtdestillation im Hochvakuum (0,1 - 0,3 mbar) bei einer Temperatur von 150 °C abgetrennt.

| Produktdaten: | |
|---|---|
| Ausbeute | ca. 1000 g |
| NCO-Gehalt | 13,9 % |
| Viskosität (23°C) | 280 mPas |
| fr. HDI-Gehalt | < 0,03 % |
| Jodzahl | 54 |
| Allophanatgruppengehalt | 160 mg/g (berechnet) |
| Gehalt an Kohlenwasser stoffketten mit (im Mittel) 18 Kohlenstoffatomen | 410 mg/g |

### Beispiel 2

In einer mit Stickstoff gespülten Rührapparatur werden 250 g (2,25 val) Isophorondiisocyanat vorgelegt und bei 60 °C mit 61,2 g (0,22 val) entwässertem HD-Ocenol 110/130 (monofunktioneller Fettalkohol, Jodzahl: 110-130, Handelsprodukt der Henkel KGaA) versetzt. Nach ca. 2 Stunden Reaktionsdauer unter Stickstoffatmosphäre ist ein NCO-Gehalt von 27 % erreicht. Die Reaktionsmischung wird mit 189 g (2,25 val) 1,6-Hexamethylendiisocyanat versetzt auf 140 °C aufgeheizt und mit 50 ppm Zinn-(II)-octoat katalysiert. Nach einer Allophanatisierungsdauer von ca. 3 Stunden ist ein NCO-Gehalt von 33,6 % erreicht. Nachfolgend wird das überschüssige Diisocyanat durch Dünnschichtdestillation im Hochvakuum (0,1 - 0,3 mbar) bei einer Temperatur von 150 °C abgetrennt.

| Produktdaten: | |
|---|---|
| Ausbeute | ca. 140 g |
| NCO-Gehalt | 12,13 % |
| Viskosität | 500 mPas |
| fr. HDI-Gehalt | 0,05 % |
| fr. IPDI-Gehalt | 0,2 % |
| Jodzahl | 50 |
| Allophanatgruppengehalt | 158 mg/g (berechnet) |
| Gehalt an Kohlenwasser stoffketten mit (im Mittel) 18 Kohlenstoffatomen | 380 mg/g |

### Beispiel 3 (Klarlack)

Eine Basisformulierung für Klarlacke hat die folgende Zusammensetzung:
100 Teile erfindungsgemäßes Polyisocyanatgemisch aus Beispiel 1
1,6 Teile "Octa Soligen Zink 8" (35 %ige Lösung von Zinkoctoat in Testbenzin)
1,5 Teile Dibutylzinn(IV)dilaurat(10 %ig in MPA)

Der Klarlack wird auf eine gereinigte Glasplatte in einer Schichtdicke von 100 µm aufgetragen und bei Raumtemperatur gehärtet. Es resultiert eine bei Raumtemperatur nach 5,5 Stunden durchgehärtete, lösungsmittelbeständige Beschichtung.

### Beispiel 4 (pigmentierter Lack)

Ein pigmentierter Lack folgender Zusammensetzung wird durch Abmischen der Einzelkomponenten hergestellt:
56 Teile des erfindungsgemäßen Polyisocyanatgemischs gemäß Beispiel 1,
1,2 Teile ®Disperbyk 163 (Benetzungsmittel der Fa. Byk-Chemie GmbH)
2,2 Teile Toluolsulfonylisocyanat (Trocknungsmittel)
36,6 Teile Bayertitan R-KB-3 (Titandioxid-Pigment)
3,2 Teile Octa Soligen Zink 8 (H.C. Starck)
0,9 Teile Dibutylzinn-(IV)-dilaurat (10 %ig in MPA)
Nach Beschichtung einer Glasplatte in einer Schichtdicke von 100 um resultiert ein nach 5 Stunden durchgetrockneter, lösungsmittelbeständiger Lack.

## Patentansprüche

1. Olefinisch ungesättigte, Allophanatgruppen enthaltende Polyisocyanate,
gekennzeichnet durch
a) einen NCO-Gehalt von 6 bis 20 Gew.-%,
b) einen, einer Iodzahl von 15 bis 150 entsprechendem Gehalt an olefinischen Doppelbindungen,
c) einen Gehalt an Kohlenwasserstoffketten mit 12 bis 30 Kohlenstoffatomen von 100 bis 700 mg/g und
d) einen Gehalt an Allophanatgruppen (berechnet als C₂HN₂O₃, Molekulargewicht = 101) von 10 bis 300 mg/g.

2. Verfahren zur Herstellung von ungesättigten, Allophanatgruppen aufweisenden Polyisocyanaten gemäß Anspruch 1 durch Umsetzung
einer Polyisocyanatkomponente A2) mit einem NCO-Gehalt von 20 bis 61 Gew.-% und einer (mittleren) NCO-Funktionalität von 1,8 bis 2,5, bestehend im wesentlichen aus mindestens einem organischen Polyisocyanat, mit einer Urethangruppen aufweisenden Isocyanatkomponente U, gegebenenfalls in Gegenwart von die Umsetzung von Urethangruppen mit Isocyanatgruppen zu Allophanatgruppen beschleunigenden Katalysatoren, sowie gegebenenfalls weiteren Hilfs- und Zusatzmitteln, unter Einhaltung eines Äquivalentverhältnisses von Isocyanatgruppen der Komponente A2) zu Urethangruppen der Komponente U von mindestens 3:1, wobei die Urethangruppen aufweisende Isocyanatkomponente U ihrerseits ein unter Einhaltung eines NCO/OH-Äquivalentverhältnisses von 4:1 bis 120:1 hergestelltes Umsetzungsprodukt einer
Polyisocyanatkomponente A1) mit einem NCO-Gehalt von 20 bis 56 Gew.-% und einer (mittleren) NCO-Funktionalität von 1,8 bis 2,5, bestehend im wesentlichen aus mindestens einem organischen Polyisocyanat, mit
einer Alkoholkomponente B) mit einer (mittleren) Hydroxylfunktionalität von 1,0 bis 1,8
darstellt und anschließende destillative Entfernung von überschüssigen, destillierbaren Ausgangspolyisocyanaten bis zu einem Restgehalt an solchen Isocyanaten von maximal 0,5 Gew.-%, dadurch gekennzeichnet, daß die Alkoholkomponente B)
zu 80 bis 100 Gew.-% aus einer olefinisch ungesättigten Alkoholkomponente B1) einer über 60 liegenden Iodzahl, bestehend aus mindestens einem olefinisch ungesättigten Alkohol mit einer Kohlenwasserstoffkette einer (mittleren) Kettenlänge von mindestens 12 Kohlenstoffatomen und zu
0 bis 20 Gew.-% aus einer gesättigten Alkoholkomponente B2), bestehend aus mindestens einem gesättigten Alkohol des Molekulargewichtsbereichs 32 bis 300
besteht.

3. Verfahren gemäß Anspruch 2, dadurch gekennzeichnet, daß man die Umsetzung zwischen den Ausgangspolyisocyanaten und der Alkoholkomponente B) einstufig innerhalb des Temperaturbereichs von 30 bis 200°C durchführt, so daß die Polyisocyanatkomponente A2) dem nach der in situ erfolgten Urethanbildung im Reaktionsgemisch noch vorliegenden Überschuß an nicht umgesetztem Ausgangspolyisocyanat A1) entspricht.

4. Verfahren gemäß Anspruch 2, dadurch gekennzeichnet, daß man die Umsetzung zweistufig durchführt, wobei die in der zweiten Reaktionsstufe zur Allophanatisierung der vorab gebildeten Urethangruppen eingesetzte Polyisocyanatkomponente A2) ein Gemisch darstellt aus i) nach erfolgter Urethanbildung im Überschuß vorliegender, nicht umgesetzter Polyisocyanatkomponente A1) und ii) nach erfolgter Urethanbildung zugesetztem weiterem Ausgangspolyisocyanat.

5. Verfahren gemäß Anspruch 2 bis 4, dadurch gekennzeichnet, daß man als Ausgangspolyisocyanate A1) und A2) 1,6-Diisocyanatohexan und/oder 1-Isocyanato-3,3,5-trimethyl-5-isocyanatomethyl-cyclohexan verwendet.

6. Verfahren gemäß Anspruch 2 bis 5, dadurch gekennzeichnet, daß man als Komponente B) ausschließlich olefinisch ungesättigte, einwertige Alkohole, die (im Mittel) pro Molekül 14 bis 20 Kohlenstoffatome aufweisen, verwendet.

7. Verwendung der olefinisch ungesättigten Polyisocyanate gemäß Anspruch 1 als Bindemittel für bei Raumtemperatur einkomponentig zu verarbeitende Beschichtungsmaterialien.

8. Einkomponentig zu verarbeitendes bei Raumtemperatur oxidativ und unter dem Einfluß von Feuchtigkeit aushärtbares Beschichtungsmittel, bestehend aus einem Gemisch aus
(i) einem Bindemittel,
(ii) die oxidative Vernetzung beschleunigenden Katalysatoren
und gegebenenfalls
(iii) inerten Lösungsmitteln und/oder sonstigen an sich bekannten Zusatzstoffen,
dadurch gekennzeichnet, daß das Bindemittel (i) aus olefinisch ungesättigten Polyisocyanaten gemäß Anspruch 1 besteht.

## Claims

1. Olefinically unsaturated polyisocyanates containing allophanate groups characterised by
a) an NCO content of 6 to 20 wt.%,
b) a content of olefinic double bonds corresponding to an iodine value of 15 to 150,
c) a content of hydrocarbon chains having 12 to 30 carbon atoms of 100 to 700 mg/g and
d) a content of allophanate groups (calculated as C₂HN₂O₃, molecular weight = 101) of 10 to 300 mg/g.

2. Process for the production of unsaturated polyisocyanates containing allophanate groups according to claim 1 by reaction of
a polyisocyanate component A2) having an NCO content of 20 to 61 wt.% and an (average) NCO functionality of 1.8 to 2.5, substantially consisting of at least one organic polyisocyanate, with an isocyanate component U containing urethane groups, optionally in the presence of catalysts which accelerate the reaction of urethane groups with isocyanate groups to yield allophanate groups, optionally together with further auxiliary substances and additives while maintaining an equivalent ratio of component A2) isocyanate groups to component U urethane groups of at least 3:1, wherein the isocyanate component U containing urethane groups itself comprises a reaction product, produced while
maintaining an NCO/OH equivalent ratio of 4:1 to 120:1, of a
polyisocyanate component A1) having an NCO content of 20 to 56 wt.% and an (average) NCO functionality of 1.8 to 2.5, substantially consisting of at least one organic polyisocyanate, with an alcohol component B) having an (average) hydroxyl functionality of 1.0 to 1.8
and subsequent removal by distillation of excess, distillable starting polyisocyanates down to a residual content of such isocyanates of at most 0.5 wt.%, characterised in that
80 to 100 wt.% of the alcohol component B) consists of an olefinically unsaturated alcohol component B1) of an iodine value in excess of 60, consisting of at least one olefinically unsaturated alcohol having a hydrocarbon chain of an (average) chain length of at least 12 carbon atoms and
0 to 20 wt.% of the alcohol component B) consists of a saturated alcohol component B2) consisting of at least one saturated alcohol of the molecular weight range from 32 to 300.

3. Process according to claim 2, characterised in that the reaction between the starting polyisocyanates and the alcohol component B) is performed in a single stage within the temperature range from 30 to 200°C, such that the polyisocyanate component A2) corresponds to the excess of unreacted starting polyisocyanate A1) still present in the reaction mixture after completion of *in situ* urethanisation.

4. Process according to claim 2, characterised in that the reaction is performed in two stages, wherein the polyisocyanate component A2) used in the second reaction stage for allophanatising the previously formed urethane groups is a mixture of i) unreacted polyisocyanate component A1) present in excess after completion of urethanisation and ii) further starting polyisocyanate added after completion of urethanisation.

5. Process according to claims 2 to 4, characterised in that 1,6-diisocyanatohexane and/or 1-isocyanato-3,3,5-trimethyl-5-isocyanatomethylcyclohexane is/are used as the starting polyisocyanates A1) and A2).

6. Process according to claims 2 to 5, characterised in that olefinically unsaturated, monohydric alcohols having (on average) 14 to 20 carbon atoms per molecule are exclusively used as component B).

7. Use of the olefinically unsaturated polyisocyanates according to claim 1 as binders for coating materials to be applied as a single component at room temperature.

8. Oxidation- and moisture-curing coating composition to be applied as a single component at room temperature consisting of a mixture of
(i) a binder,
(ii) catalysts which accelerate oxidative crosslinking
and optionally
(iii) inert solvents and/or other additives known *per se*,
characterised in that the binder (i) consists of olefinically unsaturated polyisocyanates according to claim 1.

## Revendications

1. Polyisocyanates à insaturation oléfinique, contenant des groupes allophanate, caractérisés par:
a) une teneur en groupes NCO de 6 à 20% en poids,
b) une teneur en liaisons doubles oléfiniques correspondant à un indice d'iode de 15 à 150,
c) une teneur en chaînes d'hydrocarbures contenant de 12 à 30 atomes de carbone, de 100 à 700 mg/g, et
d) une teneur en groupes allophanate (calculés comme C₂HN₂O₃, poids moléculaire = 101) de 10 à 300 mg/g.

2. Procédé pour la préparation de polyisocyanates insaturés, présentant des groupes allophanate, selon la revendication 1, par mise en réaction
d'un composant de polyisocyanate A2) possédant une teneur en groupes NCO de 20 à 61% en poids et une fonctionnalité NCO (moyenne) de 1,8 à 2,5, constitué essentiellement par au moins un polyisocyanate organique, avec un composant d'isocyanate U présentant des groupes uréthane, le cas échéant en présence de catalyseurs accélérant la mise en réaction des groupes uréthane avec les groupes isocyanate pour obtenir des groupes allophanate, et éventuellement avec d'autres adjuvants et additifs, en maintenant un rapport d'équivalents des groupes isocyanate du composant A2) aux groupes uréthane du composant U d'au moins 3:1, dans lequel le composant d'isocyanate U présentant des groupes uréthane représente, quant à lui, un produit réactionnel, préparé en maintenant un rapport d'équivalents NCO/OH de 4:1 à 120:1,
d'un composant de polyisocyanate A1) possédant une teneur en groupes NCO de 20 à 56% en poids et une fonctionnalité NCO (moyenne) de 1,8 à 2,5, constitué essentiellement par au moins un polyisocyanate organique, avec
un composant d'alcool B) possédant une fonctionnalité hydroxyle (moyenne) de 1,0 à 1,8
et par élimination ultérieure par distillation des polyisocyanates de départ en excès, aptes à une distillation, jusqu'à ce que l'on obtienne une teneur résiduelle maximale en isocyanates de ce type de 0,5% en poids, caractérisé en ce que le composant d'alcool B)
est constitué, jusqu'à concurrence de 80 à 100% en poids, d'un composant d'alcool B1) à insaturation oléfinique possédant un indice d'iode supérieur à 60, constitué par au moins un alcool à insaturation oléfinique possédant une chaîne d'hydrocarbure dont la longueur (moyenne) de chaîne représente au moins 12 atomes de carbone, et
jusqu'à concurrence de 0 à 20% en poids d'un composant d'alcool saturé B2) constitué d'au moins un alcool saturé du domaine de poids moléculaire de 32 à 300.

3. Procédé selon la revendication 2, caractérisé en ce qu'on effectue la mise en réaction entre les polyisocyanates de départ et le composant d'alcool B) en une seule étape dans le domaine de température de 30 à 200°C, de telle sorte que le composant de polyisocyanate A2) correspond à l'excès du polyisocyanate de départ A1) n'ayant pas réagi, encore présent dans le mélange réactionnel après la formation des groupes uréthane réalisée in situ.

4. Procédé selon la revendication 2, caractérisé en ce qu'on effectue la mise en réaction en deux étapes, dans lequel le composant de polyisocyanate A2) mis en oeuvre dans la seconde étape réactionnelle pour la transformation en groupes allophanate des groupes uréthane formés au préalable, représente un mélange constitué par i) le composant de polyisocyanate A1) n'ayant pas réagi, présent en excès après la formation des groupes uréthane et ii) par l'autre polyisocyanate de départ ajouté après la formation des groupes uréthane.

5. Procédé selon les revendications 2 à 4, caractérisé en ce qu'on utilise, à titre de polyisocyanates de départ A1) et A2), le 1,6-diisocyanatohexane et/ou le 1-isocyanato-3,3,5-triméthyl-5-isocyanatométhylcyclohexane.

6. Procédé selon les revendications 2 à 5, caractérisé en ce qu'on utilise, à titre de composant B), exclusivement des alcools monovalents à insaturation oléfinique qui présentent (en moyenne), par molécule, de 14 à 20 atomes de carbone.

7. Utilisation des polyisocyanates à insaturation oléfinique selon la revendication 1, à titre de liant, pour des matières d'enduction à traiter à la température ambiante à la manière d'une matière d'enduction à un seul composant.

8. Agent d'enduction à traiter à la température ambiante à la manière d'un agent d'enduction à un seul composant et durcissable par oxydation et sous l'influence de l'humidité, constitué par un mélange comprenant
(i) un liant
(ii) les catalyseurs accélérant la réticulation par oxydation,
et, le cas échéant,
(iii) des solvants inertes et/ou d'autres additifs connus en soi
caractérisé en ce que le liant (i) est constitué par des polyisocyanates à insaturation oléfinique selon la revendication 1.
